Europäisches Patentamt

European Patent Office

Office européen des brevets

(11) Veröffentlichungsnummer: **0 324 074**
**A2**

(12) # EUROPÄISCHE PATENTANMELDUNG

(21) Anmeldenummer: **88118467.5**

(22) Anmeldetag: **05.11.88**

(51) Int. Cl.⁴: **F16J 15/12**

(30) Priorität: **11.01.88 DE 3800467**

(43) Veröffentlichungstag der Anmeldung:
**19.07.89 Patentblatt 89/29**

(84) Benannte Vertragsstaaten:
**DE ES FR GB IT**

(71) Anmelder: **Elring Dichtungswerke GmbH**
**Höhenstrasse 24**
**D-7012 Fellbach(DE)**

(72) Erfinder: **Ruess, Helmut**
**Beethovenstrasse 17**
**D-7433 Dettingen(DE)**

(74) Vertreter: **Hoeger, Stellrecht & Partner**
**Uhlandstrasse 14 c**
**D-7000 Stuttgart 1(DE)**

(54) **Flachdichtung.**

(57) Flachdichtung mit einer mehrlagigen Dichtungsplatte, welche mehrere Durchgangsöffnungen aufweist und deren beide Hauptoberflächen von Blechlagen gebildet werden, und mit einem mindestens
eine der Durchgangsöffnungen einfassenden elastomeren Dichtelement, an welches ein zwischen den
Blechlagen angeordnetes plattenförmiges Halteteil
angeformt ist, wobei zur sicheren Fixierung auch
eines dünnen Halteteils dieses mehrere Öffnungen
aufweist, in die von den Blechlagen gebildete Vorsprünge eingreifen, über die die beiden Blechlagen
miteinander durch Punktschweißen verbunden sind.

FIG.1

EP 0 324 074 A2

## Flachdichtung

Die Erfindung betrifft eine Flachdichtung mit einer mehrlagigen Dichtungsplatte, die mindestens eine Durchgangsöffnung aufweist und deren beide Hauptoberflächen von Blechlagen gebildet werden, die von mindestens einem Distanzelement im Abstand voneinander gehalten sind, und mit einem die Durchgangsöffnung einfassenden elastomeren Dichtelement, an welches ein zwischen den Blechlagen angeordnetes, steg- oder plattenförmiges Halteteil angeformt ist.

Dem Stand der Technik lassen sich bislang nur aufwendige und/oder nicht hinreichend sichere Arten der Befestigung von Gummi-Dichtelementen an Dichtungsplatten entnehmen: Bei einer bekannten dreilagigen Metalldichtung (Figur 2 der DE-OS 30 01 730) ragt die mittlere Blechlage am Rand einer Flüssigkeits-Durchgangsöffnung über die beiden äußeren Blechlagen hinaus und bildet den Haltesteg für ein im Querschnitt U-förmiges Gummi-Dichtelement, welches den Haltesteg übergreift und an diesem durch Kleben befestigt ist. Klebverbindungen haben aber eine Reihe von Nachteilen und stellen eine unsichere Befestigungsweise dar, da Klebverbindungen z.B. gegen heißes Kühlwasser nicht ausreichend beständig sind; außerdem sind das Auftragen und Aushärten des Klebstoffs umständlich und zeitraubend.

Bei einer anderen bekannten Zylinderkopfdichtung (DE-PS-30 01 599), die als einlagige Metalldichtung ausgebildet ist, dienen an die Öffnungsränder der Dichtungsplatte anvulkanisierte oder angespritzte Gummi-Dichtelemente der Abdichtung von Kühlwasser- und Schmieröl-Durchgangsöffnungen. Manche Kautschuktypen, insbesondere peroxidisch vernetzte Fluorelastomere, lassen sich aber nicht mit der erforderlichen Sicherheit an einen metallischen Träger anvulkanisieren, da die Verbindungsstelle gegen heißes Kühlwasser empfindlich ist. Außerdem erfordert das Anvulkanisieren eine teuere und umweltschädliche Vorbehandlung des Metallblechs, z.B. durch Phosphatieren.

Für die Abdichtung von Flüssigkeits-Durchgangsöffnungen bei Zylinderkopfdichtungen mit einer mehrlagigen Dichtungsplatte mit zwei äußeren Blechlagen und einer mittleren Weichstofflage wurden auch schon Gummiringe verwendet, bestehend aus einem ringförmigen Dichtelement und einem daran angeformten, in der Draufsicht gleichfalls ringförmigen Haltesteg, welcher zwischen die eine Blechlage und die Weichstofflage eingreift und in letztere eingepreßt ist (US-PS-2 395 243). Die Erfahrung hat jedoch gezeigt, daß bei Verwendung solcher Gummiringe in modernen Verbrennungsmotoren die Gefahr besteht, daß das Gummi-Dichtelement in den abzudichtenden Flüssigkeitskanal hineingezogen wird, wenn man dies nicht durch eine Metallhülse verhindert, die in den Flüssigkeitskanal eingesetzt wird und den Gummiring durchsetzt, so wie dies bereits der Stand der Technik vorschlägt (siehe Figuren 5 und 6 der US-PS-2 395 243).

Schließlich läßt sich dem Stand der Technik (GB-2 188 107-A) auch schon eine Zylinderkopfdichtung der eingangs erwähnten Art entnehmen, deren Dichtungsplatte, ausgenommen ringförmige Bereiche um die Brennraum-Durchgangsöffnungen herum, dreilagig und aus zwei äußeren Blechlagen sowie einer dazwischen liegenden Gummilage zusammengesetzt ist. An die letztere ist für jede Flüssigkeits-Durchgangsöffnung ein ringförmiges, über die äußeren Blechlagen vorspringendes Gummi-Dichtelement angeformt, so daß die äußeren Blechlagen entsprechende Öffnungen besitzen, in die das betreffende Dichtelement eingreift. Rings um die Brennraum-Durchgangsöffnungen herum werden die beiden äußeren Blechlagen durch einen im Querschnitt U-förmigen Metallblech-Brennraum-Einfassungsring zusammen- und unmittelbar gegeneinander gepreßt, so daß dort, wo die Gummilage vorhanden ist, diese als Distanzelement für die beiden Blechlagen wirkt und zwischen diesen eingespannt ist. Deshalb besteht die Gefahr, daß bei durch Temperaturänderungen bewirkten Bewegungen der beiden äußeren Blechlagen relativ zueinander in der Dichtungsplattenebene die ringförmigen Dichtelemente von der Gummi-Zwischenlage abgerissen werden, vor allem bei einer so geringen Dicke der Gummi-Zwischenlage, wie sie der Stand der Technik zeigt.

Schließlich wurde schon eine Flachdichtung vorgeschlagen (Figur 5 der älteren Patentanmeldung P 37 18 569.1),bei der zwei äußere Blechlagen der Dichtungsplatte ein eine Flüssigkeits-Durchgangsöffnung einfassendes ringförmiges Gummi-Dichtelement formschlüssig haltern; zu diesem Zweck ist an dieses ein sich in radialer Richtung nach außen erstreckender Haltesteg aus Gummi angeformt, welcher oben und unten jeweils eine Ringnut aufweist, in die aufeinander zu abgebogene, um die Durchgangsöffnung herum angeordnete Randbereiche der äußeren Blechlagen eingreifen. In diese sind tiefgezogene, napfförmige Vorsprünge eingeformt, die in das Innere der Dichtungsplatte hineinragen und mit ihren Böden gegeneinander anliegen und miteinander verschweißt sind, so daß über diese Vorsprünge die beiden Blechlagen miteinander verbunden und auf Abstand voneinander gehalten sind. Diese Flachdichtung macht enge Fertigungstoleranzen am Haltesteg des Gummi-Dichtelements und an den abgebogenen Randbereichen der Blechlagen erforderlich, und da durch die beiden Ringnuten der Haltesteg stark geschwächt wird, besteht bei Verwendung von Elastomeren mit geringer mechanischer Festigkeit die Gefahr eines Abreißens des eigentlichen Dichtelements vom Haltesteg.

Der Erfindung lag deshalb die Aufgabe zugrunde, eine Flachdichtung mit mindestens einem, eine Durchgangsöffnung einfassenden elastomeren Dichtelement zu schaffen, bei der sich letzteres einfach und dauerhaft mit der Dichtungsplatte verbinden läßt. Bei einer Flachdichtung der eingangs erwähnten Art läßt sich diese Aufgabe erfindungsgemäß dadurch lösen, daß das Halteteil mindestens eine Öffnung aufweist, in die ein von einer Blechlage gebildeter Vorsprung eingreift. Es kann dann auf eine Schwächung des Halteteils durch eine um das eigentliche elastomere Dichtelement umlaufende Nut oder dergleichen verzichtet werden, und es ist auch nicht erforderlich, ja noch nicht einmal erwünscht, daß das Halteteil zwischen den beiden äußeren Blechlagen der Dichtungsplatte eingespannt ist, so daß durch Temperaturänderungen hervorgerufene Bewegungen der beiden Blechlagen relativ zueinander in der Ebene der Dichtungsplatte nicht zu einer Beschädigung des elastomeren Halteteils und des daran angeformten elastomeren Dichtelements führen können. Das elastomere Bauelement, bestehend aus Halteteil und Dichtelement, läßt sich einfach herstellen, aber auch einfach montieren, da es sich bei der Montage der Flachdichtung auf diejenige Blechlage auflegen läßt, die mit dem Vorsprung bzw. mit den Vorsprüngen versehen ist, so daß diese das elastomere Bauelement positionieren. Deshalb empfiehlt es sich natürlich auch, das Halteteil mit mehreren Öffnungen für den Eingriff mehrerer Blechlagen-Vorsprünge zu versehen. Dabei können diese Vorsprünge alle an einer Blechlage vorgesehen und die andere Blechlage eben sein, es ist aber auch möglich, beide Blechlagen mit Vorsprüngen zu versehen, und zwar derart, daß in die Öffnungen des Halteteils abwechselnd die eine und die andere Blechlage mit ihren Vorsprüngen eingreift, oder daß in eine Öffnung jeweils Vorsprünge beider Blechlagen eingreifen.

Ein ganz wesentlicher Vorteil der Erfindung ist darin zu sehen, daß sie eine rein mechanische und dennoch äußerst platzsparende und sichere Befestigung elastomerer Dichtelemente ermöglicht, z.B. auch dann, wenn die Dichtungsplatte einer Zylinderkopfdichtung zwischen einer Brennraum-Durchgangsöffnung und einer Flüssigkeits-Durchgangsöffnung nur einen schmalen Steg aufweist, der eine sichere formschlüssige Befestigung in der herkömmlichen Weise nicht zuläßt. Auch muß die Befestigung der Halteteile meist nicht an einer bestimmten Stelle erfolgen -letztere ist vielmehr in der Regel frei wählbar -, so daß die Befestigung an Stellen vorgenommen werden kann, die hierfür reichlich Platz bieten.

Die Erfindung ermöglicht es auch, bei einer Dichtungsplatte mit mehreren, durch elastomere Dichtelemente eingefaßten Durchgangsöffnungen mehrere solche Dichtelemente über ein diesen gemeinsames Halteteil miteinander zu verbinden, wodurch (wegen der Verringerung der Teilezahl) die Herstellung der Flachdichtung verbilligt und die Montage der Dichtungsplatte vereinfacht wird; außerdem werden die einzelnen Dichtelemente noch sicherer an der Dichtungsplatte gehalten.

Die Vorsprünge könnten im Prinzip jede beliebige Gestalt haben, z.B. die Gestalt angestanzter und aus den Blechlagen herausgebogener Zungen; bevorzugt wird jedoch eine Ausführungsform, bei der die Vorsprünge tiefgezogen und napfförmig sind und mit ihren Böden gegeneinander oder gegen die jeweils andere Blechlage anliegen. Dennoch müssen die Vorsprünge nicht als Distanzelemente zwischen den beiden Blechlagen wirken, d.h. sie müssen nicht tragen, wenn, wie bei einer bevorzugten Ausführungsform, ein anderes Distanzelement vorhanden ist, insbesondere ein eine Brennraum-Durchgangsöffnung umfassendes, zwischen den Blechlagen liegendes Brennraumelement. Zweckmäßigerweise wird man jedoch die beiden Blechlagen über die Vorsprünge miteinander verbinden, insbesondere durch Punktschweißen.

Bei Zylinderkopfdichtungen empfiehlt es sich schließlich, das elastomere Halteteil im Abstand von der Brennraum-Durchgangsöffnung enden zu lassen und den so zwischen dem Halteelement und der Brennraum-Durchgangsöffnung bzw. dem dieser zugeordneten Brennraumelement verbliebenen Zwischenraum zwischen den beiden Blechlagen als Hohlraum zu belassen oder mit einem wärmedämmenden Material zu füllen, um eine Zerstörung des elastomeren Halteteils durch die Brennraumtemperaturen zu verhindern. Bei Ausführungsformen, bei denen der Hohlraum mit Zwischenlagen ausgefüllt wird, lassen sich die Verzüge der Zylinderkopfdichtung beliebig steuern.

Die Erfindung eignet sich besonders als Zylinderkopfdichtung für Verbrennungsmotoren, bei denen der Zylinderkopf mit geringen Schraubenkräften angezogen wird. Es können vielerlei bekannte Elastomere verwendet werden.

Weitere Merkmale, Vorteile und Einzelheiten der Erfindung ergeben sich aus den beigefügten Ansprüchen und/oder aus der nachfolgenden Beschreibung sowie der beigefügten zeichnerischen Darstellung bevorzugen, als Zylinderkopfdichtungen ausgebildeter Ausführungsformen; in der Zeichnung zeigen:

Figur 1 eine schematische Draufsicht auf eine erste erfindungsgemäße Zylinderkopfdichtung;

Figur 2 einen Schnitt nach der Linie 2-2 in Figur 1;

Figur 3 eine Draufsicht auf einen Teil einer zweiten erfindungsgemäßen Zylinderkopfdichtung, und

Figur 4 einen Schnitt nach der Linie 4-4 in Figur 3.

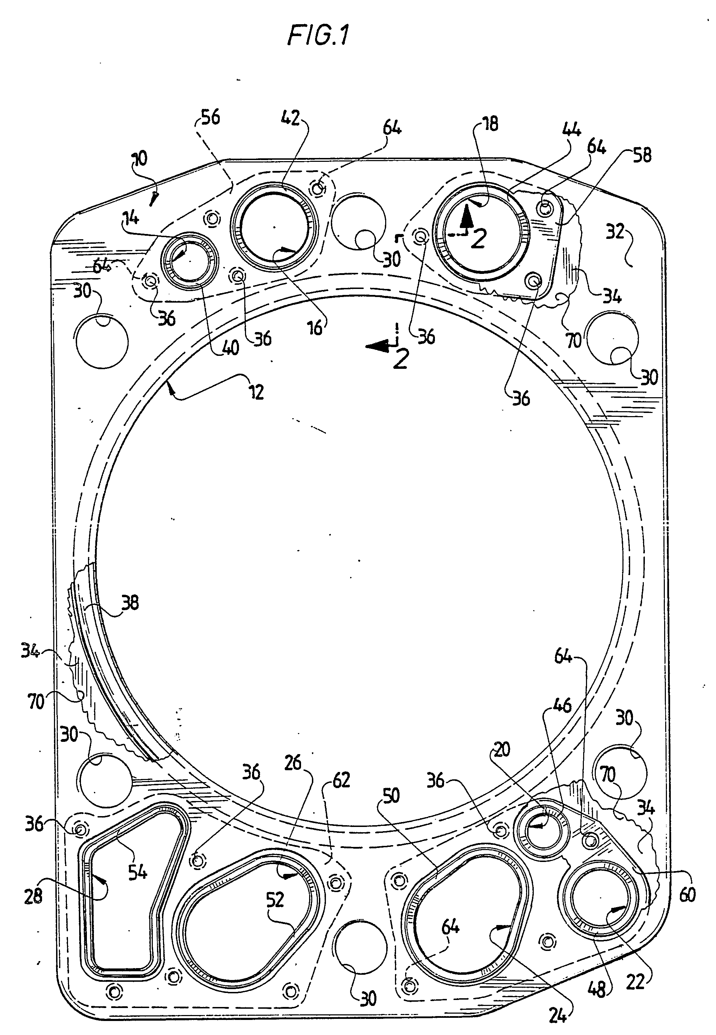

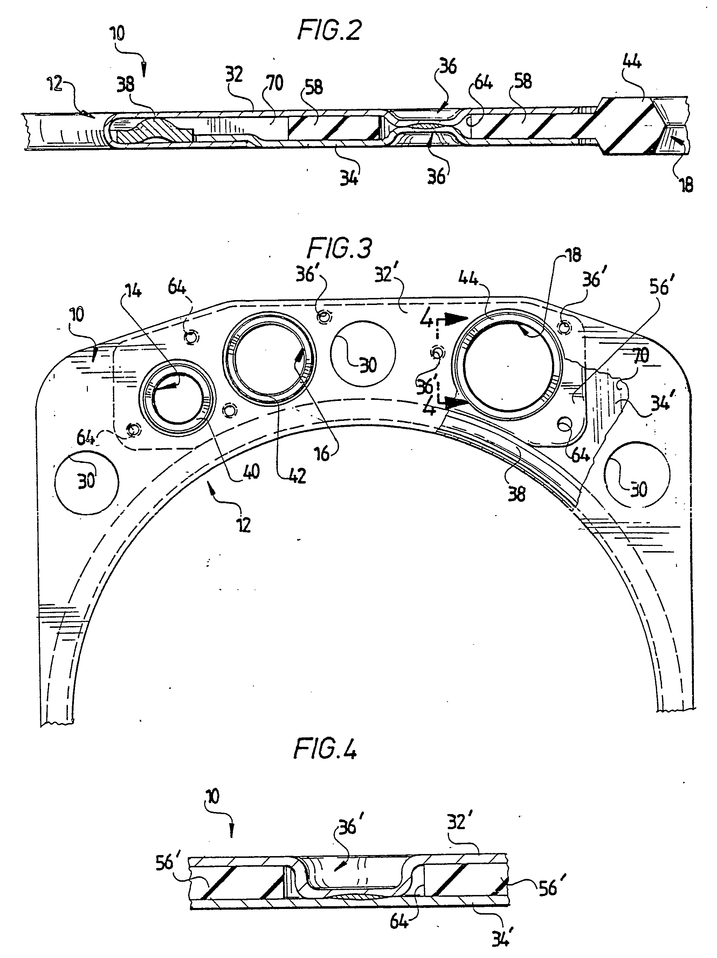

Die in den Figuren 1 und 2 dargestellte Zylinderkopfdichtung besitzt eine Dichtungsplatte 10 mit einer Brennraum-Durchgangsöffnung 12, mehreren Flüssigkeits-Durchgangsöffnungen 14, 18, 20, 22, 24, 26 und 28 sowie Schrauben-Durchgangsöffnungen 30.

Wie die Figur 2 deutlich erkennen läßt, besteht die Dichtungsplatte 10 im wesentlichen aus zwei Blechlagen 32 und 34, in die an mehreren Stellen napfförmige Vorsprünge 36 geprägt wurden, wobei die Höhe dieser Vorsprünge der halben Dicke der Dichtungsplatte minus der Blechstärke entspricht und die Vorsprünge an einander entsprechenden Stellen aus den beiden Blechlagen herausgedrückt wurden, so daß die Vorsprünge mit ihren Böden paarweise gegeneinander anliegen. Schließlich sind die beiden Blechlagen 32 und 34 an den gegeneinander anliegenden Böden der napfförmigen Vorsprünge 36 miteinander durch Punktschweißen verbunden.

Als tragendes Distanzelement zwischen den beiden Blechlagen 32 und 34 dient erfindungsgemäß ein als insbesondere gesickter Metallring ausgebildetes Brennraumelement 38. Um letzteres ist eine der beiden Blechlagen, nämlich die Blechlage 32, herumgebördelt, so daß sie zusammen mit dem Brennraumelement 38 eine Einfassung für die Brennraum-Durchgangsöffnung 12 bildet.

Bei der erfindungsgemäßen Zylinderkopfdichtung sind die Flüssigkeits-Durchgangsöffnungen 14, 16 etc. mit ringförmigen, dichtlippenartigen elastomeren Dichtelementen 40, 42, 44, 46, 48, 50, 52 und 54 eingefaßt, an die im Querschnitt stegförmige, in der Draufsicht plattenförmige Halteteile 56, 58, 60 und 62 aus elastomerem Material einstückig angeformt sind, und zwar ist bei der dargestellten Ausführungsform den Dichtelementen 40 und 42 das Halteteil 56 zugeordnet, dem Dichtelement 44 das Halteteil 58, den Dichtelementen 46, 48 und 50 das Halteteil 60 und den Dichtelementen 52 und 54 das Halteteil 62. Nach einem weiteren Merkmal der Erfindung besitzen die Halteteile an den Stellen der Vorsprünge 36 jeweils ein kleines Loch 64, dessen Durchmesser und Gestalt denjenigen der Vorsprünge 36 entspricht, die in die Löcher 64 eingreifen und so die aus Halteteilen und Dichtelementen bestehenden elastomeren Bauelemente erfindungsgemäß formschlüssig fixieren und positionieren, ohne daß es eines Einpressens oder Einklemmens dieser Bauelemente zwischen den Blechlagen 32, 34 bedarf.

Erfindungsgemäß sind die Vorsprünge 36 so gestaltet, daß sie bei eingebauter Zylinderkopfdichtung nicht tragen, d.h. die Dichtelemente 40, 42 etc. und das Brennraumelement 38 sind, zusammen mit den Blechlagen 32, 34, in der Dicke bzw. Höhe so aufeinander abgestimmt, daß bei eingebauter Zylinderkopfdichtung die Schraubenkräfte im wesentlichen vom Brennraumelement 38 aufgenommen werden und die Dichtelemente 40, 42 etc. mit hinreichender Dichtpressung gegen Motorblock und Zylinderkopf anliegen.

Wenn der zwischen einer Flüssigkeits-Durchgangsöffnung und der Brennraum-Durchgangsöffnung 12 in der Dichtungsplatte 10 verbleibende Steg breit genug ist, empfiehlt es sich, das zu dem Dichtelement dieser Flüssigkeits-Durchgangsöffnung gehörende Halteteil im radialen Abstand vom Brennraumelement 38 enden zu lassen, so wie dies die Figur 2 für das Halteteil 58 darstellt; es entsteht dann ein die Wärmeleitung unterbrechender Hohlraum 70 zwischen Brennraumelement 38 und Halteteil 58, der gegebenenfalls mit wärmedämmendem Material ausgefüllt werden kann, auf jeden Fall aber dafür sorgt, daß das aus elastomerem Material bestehende Halteteil durch die am Rand der Brennraum-Durchgangsöffnung 12 herrschenden Temperaturen nicht zerstört werden kann.

Die Figur 1 läßt bereits erkennen, daß nicht für jedes Dichtelement ein separates Halteteil vorgesehen sein muß, sondern daß mehrere Dichtelemente an ein gemeinsames, plattenförmiges Halteteil angeformt sein können.

Die Ausführungsform nach den Figuren 3 und 4 unterscheidet sich von derjenigen nach den Figuren 1 und 2 im wesentlichen nur durch die Ausgestaltung der die elastomeren Halteteile fixierenden und die beiden Blechlagen miteinander verbindenden Vorsprünge; außerdem tritt bei dieser zweiten Ausführungsform an die Stelle der beiden Halteteile 56 und 58 der ersten Ausführungsform ein den drei Dichtelementen 40, 42 und 44 gemeinsames Halteteil 56'. Wie die Figur 4 deutlich erkennen läßt, sind bei dieser Ausführungsform nur aus der einen Blechlage 32' napfförmige Vorsprünge 36' herausgedrückt, die gegen die ebene Blechlage 34' anliegen und mit dieser durch Punktschweißen verbunden sind. Die Höhe des Vorsprungs 36' entspricht also der Dicke des Halteteils 56' (oder ist geringfügig größer), so daß in das Loch 64 des Halteteils 56' nur von der einen Seite her ein Vorsprung eingreift.

Ein Vergleich der Zeichnungen der älteren Anmeldung P 37 18 569.1 mit der Figur 2 zeigt deutlich den Fortschritt, der mit der vorliegenden Erfindung erzielt wurde: Flachdichtungen der in Rede stehenden Art sind häufig außerordentlich dünn, weshalb die zum formschlüssigen Halten der elastomeren Dichtelemente bei der Flachdichtung nach der älteren Anmeldung erforderlichen abgebogenen ringförmigen Bereiche der beiden Blechlagen nur eine Höhe von 2 bis 3/10 mm aufweisen können und infolgedessen schon geringe Fertigungstoleranzen beim Abbiegen dazu führen können, daß entweder sich die elastomeren Dichtelemente zwischen den Blechlagen herausziehen lassen oder daß die umgebogenen Blechteile die dünne Schicht elastomeren Materials zwischen den beiden Ringnuten abscheren. Hingegen werden die elastomeren Halteteile bei der erfindungsgemäßen Flachdichtung durch die aus den Blechlagen herausgeformten Vorsprünge, die mit der gegenüberliegenden Blechlage verschweißt sind, stets sicher fixiert, und zwar völlig unabhängig von der Dicke der Halteteile.

Im Rahmen der Erfindung liegt auch der Gedanke, die Blechlagen durch Lagen aus einem anderen temperaturbeständigen Hartstoff, insbesondere Kunststoff, zu ersetzen.

Auch können oberflächenbeschichtete Blechlagen verwendet werden, die sich dann gegebenenfalls nicht miteinander verschweißen lassen, sondern verklebt oder vernietet werden müssen.

## Ansprüche

1. Flachdichtung mit einer mehrlagigen Dichtungsplatte, die mindestens eine Durchgangsöffnung aufweist und deren beide Hauptoberflächen von Blechlagen gebildet werden, die von mindestens einem Distanzelement im Abstand voneinander gehalten sind, und mit einem die Durchgangsöffnung einfassenden elastomeren Dichtelement, an welches ein zwischen den Blechlagen angeordnetes, steg- oder plattenförmiges Halteteil angeformt ist, dadurch gekennzeichnet, daß das Halteteil (56, 58, 60, 62), welches ein vom Distanzelement (38) verschiedenes Teil bildet, mindestens eine Öffnung (64) aufweist, in die ein von einer Blechlage (32, 34) gebildeter Vorsprung (36) eingreift.

2. Flachdichtung nach Anspruch 1, dadurch gekennzeichnet, daß das Halteteil (56) mindestens zwei Öffnungen (64) für den Eingriff zweier Blechlagen-Vorsprünge (36) aufweist.

3. Flachdichtung nach Anspruch 1 oder 2, dadurch gekennzeichnet, daß das Halteteil (56) überall dieselbe Dicke besitzt und unmittelbar in das über die Blechlagen (32, 34) vorspringende Dichtelement (40, 42) übergeht.

4. Flachdichtung nach einem oder mehreren der Ansprüche 1 bis 3, mit mehreren, durch elastomere Dichtelemente eingefaßten Durchgangsöffnungen, dadurch gekennzeichnet, daß mindestens zwei Dichtelemente (40, 42) über ein beiden gemeinsames Halteteil (56) miteinander verbunden sind.

5. Flachdichtung nach einem oder mehreren der vorstehenden Ansprüche, dadurch gekennzeichnet, daß die beiden Blechlagen (32, 34) über den Vorsprung (36) miteinander verbunden sind.

6. Flachdichtung nach Anspruch 5, dadurch gekennzeichnet, daß der Vorsprung (36, 36′) tiefgezogen und napfförmig ist und mit seinem Boden gegen den Boden eines napfförmigen Vorsprungs (36) der anderen Blechlage (32 bzw. 34) oder gegen diese selbst (34′) anliegt.

7. Flachdichtung nach Anspruch 5 oder 6, dadurch gekennzeichnet, daß die beiden Blechlagen (32, 34) über den Vorsprung (36) miteinander verschweißt sind.

8. Flachdichtung nach einem oder mehreren der vorstehenden Ansprüche, dadurch gekennzeichnet, daß der Vorsprung (36) passend in die Öffnung (34) des Halteteils (56) eingreift.

9. Zylinderkopfdichtung mit mindestens einer Brennraum-Durchgangsöffnung nach einem oder mehreren der vorstehenden Ansprüche, dadurch gekennzeichnet, daß die Brennraum-Durchgangsöffnung (12) von einem ringförmigen, zwischen den Blechlagen (32, 34) liegenden und das Distanzelement bildenden Brennraumelement (38) umfaßt ist, und daß das elastomere Halteteil (58) im Abstand von diesem Brennraumelement endet.

## FIG.1

Blatt  1     E l r i n g   Dichtungswerke GmbH    ,    Höhenstraße  24   ,
2  Blatt                                          7012   Fellbach

HOEGER. STELLRECHT & PARTNER                    A  47  793  b

FIG.2

FIG.3

FIG.4